# EUROPEAN PATENT APPLICATION

(11) **EP 1 245 992 A2**
(43) Date of publication of application: **02.10.2002**
(21) Application number: 01201179.7
(22) Date of filing: 29.03.2001
(51) Int. Cl.: G02F 1/035

(54) **High-speed optoelectronic devices**

(71) Applicant: Agere Systems Optoelectronics Guardian Corporation, Orlando, Florida 32819-8698 (US)
(72) Inventor: Chen, Antao, Allentown, Pennsylvania, 18104 (US)
(74) Representative: Perkins, Sarah

(57) **Abstract**

An optical device including a substrate (21) adapted to propogate light therethrough, and an electrode (23) formed over the substrate and adapted to propogate high frequency electrical signals in order to modulate the light. Formed over the electrode on at least an end portion (d) is a coating (24) which absorbs a significant portion of the high frequency signals.

## Description

### Field of the Invention

This invention relates to optoelectronics, and in particular to devices and networks using a high frequency electrical signal, and a method for fabricating the devices.

### Background of the Invention

In modern optical networks, speed is a crucial factor. Thus, in many networks, devices are operated with high frequency electrical signals, i.e., at least 0.1 GHz. For example, high speed modulators, such as lithium niobate modulators, are usually biased by a traveling wave electrode which is placed on top of the device and carries high frequency electrical signals. In order to prevent reflection of the electrical signal from the end of the electrode, the electrode is usually terminated with an impedance matched resistor and/or capacitor network. Such an approach is usually costly, and can result in degraded performance for high bandwidth signals.

It is desirable, therefore, to provide a low cost structure and method for preventing unwanted reflections of electrical signals in optoelectronics devices.

### Summary of the Invention

The invention in accordance with one aspect is an optical device including a substrate adapted to propogate light therethrough, and an electrode formed over the substrate and adapted to propogate high frequency electrical signals in order to modulate the light. Formed over the electrode on at least an end portion is a coating which absorbs a significant portion of the high frequency signals.

### Brief Description of the Figures

These and other features of the invention are delineated in detail in the following description as examples only. In the drawing:
Fig 1 is a schematic illustration of a portion of an optical network which may incorporate a device in accordance with one embodiment of an aspect of the invention;
Figs 2 and 3 are cross sectional and plan views, respectively, of a device in accordance with one embodiment of an aspect of the invention; and
Figs. 4 and 5 are cross-sectional and plan views, respectively, of a device in accordance with another embodiment of the invention.

It will be appreciated that, for purposes of illustration, these figures are not necessarily drawn to scale.

### Detailed Description

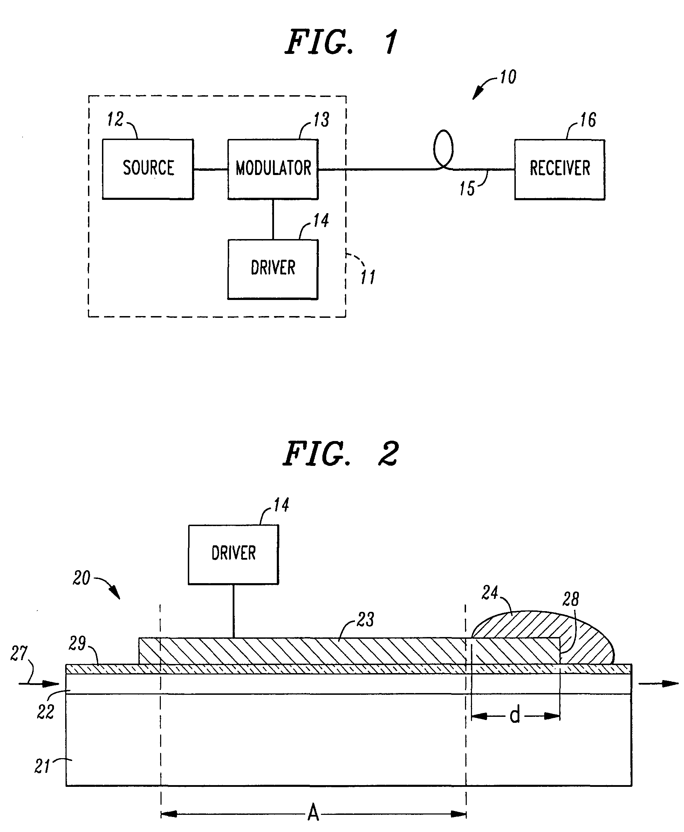

Fig 1 illustrates a portion of a typical optical network, 10, which may utilize the principles of the invention. An optical transmitter, 11, typically includes a source of light, 12, usually a semiconductor laser, which is optically coupled to a modulator, 13. In this example, the modulator is a separate crystal component such as a lithium niobate modulator, but can be integral with the laser, such as in an Electroabsorption Modulated Laser (EML). The modulator, 13, is driven by a source of electrical signal, 14, which is preferably a high frequency signal operating in the range 100 MHz to 100 GHz. The invention appears to be most advantageous for microwave signals (1 GHz - 100 GHz), and works particularly well at frequencies above 5 GHz. The modulated light signal is optically coupled to an optical fiber, 15, which couples the signal to an optical receiver, 16. It will be appreciated that the network typically includes many other components, such as isolators, routers, and fiber amplifiers, which are not shown for the sake of simplicity.

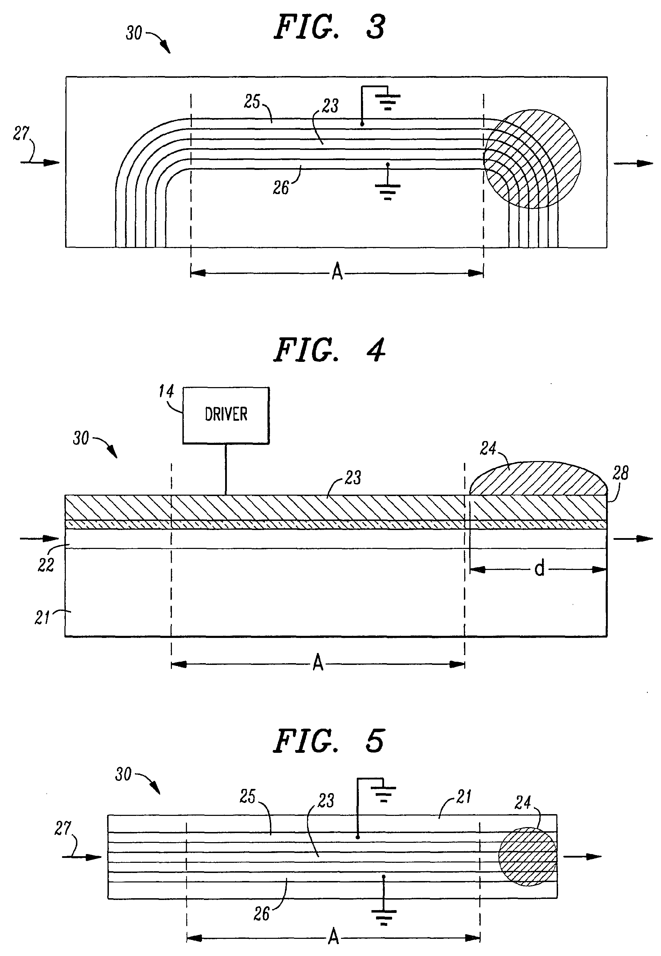

Figs 2 and 3 illustrate one embodiment of a modulator, 20, in accordance with principles of the invention. The modulator includes a substrate, 21, made of a crystalline material such as lithium niobate. Other possible materials include indium phosphate and gallium arsenate. An optical waveguide, 22, is preferably formed in the top surface of the substrate. The waveguide is typically formed by diffusion of impurities such as titanium in the top surface, but could be formed by other well known techniques. A thin layer, 29, of a dielectric such as SiO₂ is preferably deposited on the top surface of the substrate. A traveling wave electrode is also deposited over the top surface of the substrate. The electrode includes a center conductor, 23, and side conductors, 25 and 26, on either side of the center conductor. The electrode is typically made of gold and is electroplated onto the dielectric layer, 29. The electrical signal is supplied to the center conductor, 23, while the side conductors are grounded so as to launch a microwave signal in the electrode. This signal modifies the optical characteristics of the underlying waveguide, 22, in order to modulate the light signal, represented by arrow, 27, which is coupled into the waveguide and propogates therethrough essentially parallel to the top surface of the substrate.

It will be understood that if the microwave signal were reflected at the end, 28, of the electrode, the proper modulation of the propogating light would be disrupted due to a disturbance to the driver, 14, which applies the signal to the electrode.

In order to absorb a substantial portion of the microwave signal, a coating, 24, is applied over an area of the electrode including the end, 28. Preferably, the coating covers an end portion, d, of the electrode which is at least 1 mm to ensure adequate absorption. Desirably, the coating will absorb at least 50 percent of the microwave signal. The coating may be deposited, for example, by applying a drop of the material through a standard dispenser. It can also be brushed on the electrode. In a particular example, the coating comprised an epoxy with Fe fillers which is sold by Emerson & Cuming Microwave Products, Inc. under the designation ECCOSORB®. Other materials which would be advantageous include silicone rubber. In general, any coating which absorbs at least 50 percent of the signal could be useful in order to prevent disruption of the driver, 14.

It will be noted that the coating, 24, is preferably deposited outside the active region of the modulator. The active region length, indicated by "A" in Figs. 2 and 3, represents the desired length of interaction between the electrical signal and the light propogating in the underlying waveguide, 22. This length will be determined primarily based on the voltage required to operate the device and the desired bandwidth. For example, in a device requiring 3 volts and with a bandwidth of 10 GHz, a standard length is approx. 4 cm and will usually fall within the range 1-4 cm. In most designs, the coating will cover no more than 2 cm of the electrode material.

It will be appreciated that the coating can be applied easily and at low cost since only a drop of the material is needed and the material itself is inexpensive. Further, the coating will absorb at high frequencies (at least 5 GHz) whereas traditional impedance-matched terminations usually do not work well at high frequencies. Thus, the invention is both less expensive and more effective than traditional approaches.

The embodiment illustrated in Figs. 2 and 3 shows a curved traveling wave electrode, 23, 25, 26, which terminates at a side of the substrate, 21. This is a standard type of electrode shape for providing impedance matching terminations. However, with the present invention, the electrodes can be straight as shown in Figs. 4 and 5, where elements corresponding to Figs. 2 and 3 are similarly numbered. The presently preferred embodiment in fact provides straight electrodes extending to the ends of the substrate as shown in Figs. 4 and 5. It will be noted that the coating, 24, is still preferably applied over an end portion of the electrode, defined by length d, which is outside the active region, defined by length A. If desired, the electrode, 23, 25, 26, need not extend all the way to the ends of the substrate.

It will be appreciated that the invention is preferably employed with the type of traveling wave electrode where the center, 23, and two side conductors, 25,26, are formed on the same surface since most of the electric field will be established on top of the electrode where the coating, 24, can provide significant absorption. However, it may be possible in some applications to use the coating with a microstrip line where the center conductor and grounded conductor are on opposite surfaces of the substrate.

## Claims

1. An optical device comprising:
a substrate (21) adapted for propogating light therethrough;
an electrode (23,25,26) formed over the substrate and adapted to propogate high frequency electrical signals in order to modulate the light; and
a coating (28) which absorbs a significant portion of the high frequency signals formed over the electrode on at least an end portion (d).

2. The device according to claim 1 wherein the substrate comprises a material selected from lithium niobate, indium phosphate and gallium arsenate.

3. The device according to claim 1 wherein the substrate comprises lithium niobate.

4. The device according to claim 1 wherein the electrode is a traveling wave electrode.

5. The device according to claim 4 wherein the electrode comprises a center conductor (23) and at least one side conductor (25,26) over the same surface of the substrate.

6. The device according to claim 1 wherein the electrode comprises gold.

7. The device according to claim 1 wherein the coating comprises an epoxy.

8. The device according to claim 7 wherein the coating comprises an iron filler.

9. The device according to claim 1 wherein the coating absorbs at least 50 percent of the high frequency signal.

10. The device according to claim 1 wherein the coating covers an end portion which is at least 1 mm long.

11. The device according to claim 1 wherein the device includes an active region, (A) and the coating is deposited over a portion of the electrode outside the active region.

12. The device according to claim 11 wherein the coating is deposited over a portion whose length is within the range 1 mm - 2 cm.

13. An optical device comprising:
a lithium niobate substrate (21) including a waveguide (22) for propogation of light;
a traveling wave electrode (23. 25. 26) formed over the substrate and adapted for propogating a microwave electrical signal therethrough which modulates the light in the waveguide in an active region (A);
an epoxy coating (24) including an iron filler formed on an end portion of the electrode outside the active region, which coating is adapted to absorb at least 50 percent of the microwave signal.

14. An optical transmitter (11) comprising a light source (12) and a modulator (13) , the modulator comprising:
a substrate (21) adapted for propogating light therethrough;
an electrode (23, 25, 26) formed over the substrate and adapted to propogate high frequency electrical signals in order to modulate the light; and
a coating (24) which absorbs a significant portion of the microwave signals formed over the electrode on at least an end portion.

15. An optical network comprising a transmitter (11), an optical fiber (15) coupled to the transmitter, and a receiver (16) coupled to the fiber, wherein the transmitter includes a modulator (13) comprising:
a substrate (21) adapted for propogating light therethrough;
an electrode (23, 25, 26) formed over the substrate and adapted to propogate high frequency electrical signals in order to modulate the light; and
a coating (24) which absorbs a significant portion of the high frequency signals formed over the electrode on at least an end portion.

16. A method for forming an optical device comprising the steps of:
forming an optical waveguide (22) in a substrate;
forming an electrode (23, 25, 26) over a major surface of the substrate which electrode is adapted for propogating a high frequency electrical signal; and
forming a coating (24) over at least an end portion (d) of the electrode, which coating is adapted to absorb a significant portion of the high frequency signal.

17. The method according to claim 16 wherein the coating is formed by depositing a drop of material through a dispenser.

18. The method according to claim 16 wherein the coating comprises an epoxy.

19. The method according to claim 18 wherein the coating includes an iron filler.

20. The method according to claim 16 wherein the coating is deposited over an end portion which is at least 1 mm long

21. The method according to claim 16 wherein the device includes an active region (A), and the coating is formed over an end portion outside the active region.
